# EUROPÄISCHE PATENTSCHRIFT

(11) **EP 3 835 666 B1**
(45) Veröffentlichungstag und Bekanntmachung des Hinweises auf die Patenterteilung: **14.06.2023**
(21) Anmeldenummer: 20212670.2
(22) Anmeldetag: 09.12.2020
(51) Int. Cl.: F24D 3/18, F24D 10/00, F24F 1/00, F24F 3/10

(54) **GEBÄUDESYSTEM ZUR KLIMATISIERUNG UND WÄRMEVERSORGUNG**
BUILDING SYSTEM FOR AIR CONDITIONING AND HEAT SUPPLY
SYSTÈME DE BÂTIMENT DESTINÉ À LA CLIMATISATION ET À L'APPROVISIONNEMENT EN CHALEUR

(30) Priorität: 13.12.2019 DE 102019134349
(43) Veröffentlichungstag der Anmeldung: 16.06.2021
(73) Patentinhaber: Wolfgang Jaske und Dr. Peter Wolf GbR, 49811 Lingen (DE)
(72) Erfinder: Wolf, Peter, 26209 Hatten (DE); Jaske, Wolfgang, 49811 Lingen (DE)
(74) Vertreter: Jabbusch, Matthias

(56) Entgegenhaltungen:
- EP-A1- 3 267 119
- EP-A1- 3 273 169
- WO-A1-95/20133
- WO-A1-95/20134
- WO-A1-95/20135

## Beschreibung

Die Erfindung betrifft ein Gebäudesystem zur Klimatisierung und Wärmeversorgung wenigstens eines Gebäudes oder eines Gebäudeteils über wenigstens ein Wärmenetz nach dem Oberbegriff des Patentanspruchs 1 mit wenigstens einer Wärmepumpe, die einen Verdampfer, einen Kondensator und einen zwischen dem Verdampfer und dem Kondensator ausgebildeten Kältemittelkreislauf aufweist, mit wenigstens einem Wärmeabnehmer, insbesondere einem Heizungskreislauf, der kondensatorseitig über einen zwischen dem Wärmeabnehmer, insbesondere dem Heizungskreislauf und dem Kondensator der Wärmepumpe ausgebildeten Wärmeträgerkreislauf wärmeübertragend mit dem Kondensator der Wärmepumpe verbunden ist, und mit zum Anschluss an das Wärmenetz vorgesehenen Wärmeträgerleitungen des Gebäudesystems.

Über Wärmenetze kann Energie aus niedertemperierten und insbesondere regenerativen Wärmequellen genutzt werden, um in einem Gebäude, einem Gebäudeteil, einem Haushalt oder dergleichen Räume zu erwärmen oder Warmwasser bereitzustellen. Mögliche Wärmequellen können dabei Gewässer, Grundwasser, Luft, Abwärme aus Produktionsbetrieben oder Kläranlagen sein. Um Wärmeverluste in einem Wärmenetz einerseits zu vermeiden und andererseits Kosten und Aufwand bei der Bereitstellung der Wärme für das Wärmenetz zu verringern, kann dieses mit Vorteil auf niederem Temperaturniveau betrieben werden. Die für die Beheizung von Räumen und die Warmwasserbereitstellung in einem einzelnen Gebäude benötigte Wärme wird daher zumeist dezentral über eine Wärmepumpe erzeugt.

Eine solche allgemein bekannte Wärmepumpe in Verbindung mit einem einfachen Wärmenetz geht unter anderem aus der DE 20 2011 106 855 U1 hervor. Gemäß der DE 20 2011 106 855 U1 kann das Wärmenetz erzeugerseitig beispielsweise eine Erdwärmesonde, einen Erdkollektor, einen Energiepfahl oder einen thermischen Solarkollektor aufweisen und verbraucherseitig ein oder mehrere Haushalte bzw. Gebäude, in denen die über das Wärmenetz bereitgestellte Wärme genutzt wird. Da über dieses Wärmenetz ausschließlich Wärme bereitgestellt werden kann, ermöglicht dieses Wärmenetz keine umfassende Klimatisierung von Gebäuden, Gebäudeteilen oder Haushalten, so dass in Abhängigkeit von vorherrschenden Umweltbedingungen zusätzliche Anlagen zum Kühlen des jeweiligen Gebäudes, Gebäudeteiles oder Haushaltes vorgesehen werden müssen. Darüber hinaus ergibt sich aus der einseitigen Nutzung der über das Wärmenetz bereitgestellten Wärme eine ineffiziente Nutzung der Wärme.

Aus EP 3 267 119 A1 ist kombiniertes Heiz- und Kühlsystem und somit ein weiteres derartiges Wärmenetz bekannt, bei dem zusätzlich das Gebäudesystem zulaufseitig drei Wärmeträgerzuleitungen auf unterschiedlichen Temperaturniveaus aufweist. Eine Wärmeträgerzuleitung weist dabei ein höheres Temperaturniveau, eine Wärmeträgerzuleitung ein mittleres Temperaturniveau und eine Wärmeträgerzuleitung ein niederes Temperaturniveau auf.

WO 95/20133 A1 offenbart ein Verfahren und ein System zur Verteilung von Wärmeenergie, bei denen ein Röhrensystem zur Erwärmung und ein Röhrensystem zur Kühlung eines Hauses vorgesehen sind. Weitere Wärmeübertragungssysteme mit einem Heizkreis und mit einem Kühlkreis sind aus EP 3 273 169 A1, aus WO 95/20134 A1 und aus WO 95/20135 A1 bekannt.

Ausgehend von dem aus EP 3 267 119 A1 bekannten kombinierten Heiz- und Kühlsystem soll die Erfindung ein Gebäudesystem bereitstellen, dass eine umfassende Klimatisierung und Wärmeversorgung ermöglicht und Wärme besonders energieeffizient einsetzt und nutzt.

Die Lösung dieser Aufgabe erfolgt vorrichtungsmäßig mit den Merkmalen des Anspruchs 1 und des Anspruchs 14 sowie verfahrensmäßig mit den Merkmalen des Anspruchs 15. Weiterbildungen und vorteilhafte Ausgestaltungen sind in den jeweils nachgeordneten Ansprüchen angegeben.

Das Gebäudesystem zur Klimatisierung und Wärmeversorgung wenigstens eines Gebäudes oder eines Gebäudeteils oder eines Haushalts über wenigstens ein Wärmenetz mit wenigstens einer Wärmepumpe, die einen Verdampfer, einen Kondensator und einen zwischen dem Verdampfer und dem Kondensator ausgebildeten Kältemittelkreislauf aufweist, mit wenigstens einem Wärmeabnehmer, insbesondere Heizungskreislauf, der kondensatorseitig über einen zwischen dem Wärmeabnehmer, insbesondere Heizungskreislauf, und dem Kondensator der Wärmepumpe ausgebildeten Wärmeträgerkreislauf wärmeübertragend mit dem Kondensator der Wärmepumpe verbunden ist, und mit zum Anschluss an das Wärmenetz vorgesehenen Wärmeträgerleitungen des Gebäudesystems, wobei das Gebäudesystem zulaufseitig wenigstens drei Wärmeträgerzuleitungen auf unterschiedlichen Temperaturniveaus aufweist, von denen eine Wärmeträgerzuleitung ein höheres Temperaturniveau, eine Wärmeträgerzuleitung ein mittleres Temperaturniveau und eine Wärmeträgerzuleitung ein niederes Temperaturniveau aufweist, zeichnet sich erfindungsgemäß dadurch aus, dass die drei Wärmeträgerzuleitungen mit den unterschiedlichen Temperaturniveaus zulaufseitig jeweils über steuerbare Ventile ansteuerbar sind und über die steuerbaren Ventile deren jeweilige Wärmeträgerdurchflussmenge regelbar ist, dass der Verdampfer zulaufseitig zumindest mit der Wärmeträgerzuleitung auf dem höheren Temperaturniveau und mit der Wärmeträgerzuleitung auf dem mittleren Temperaturniveau verbunden ist, dass die Wärmeträgerzuleitung auf dem niederen Temperaturniveau mit dem Wärmeabnehmer verbunden ist, und dass die Wärmeträgerzuleitung auf dem höheren Temperaturniveau über ein die Wärmeträgerzuleitung verzweigendes Ventil zulaufseitig mit dem Kondensator der Wärmepumpe verbunden ist.

Indem das Gebäudesystem zulaufseitig wenigstens drei Wärmeträgerzuleitungen auf unterschiedlichen Temperaturniveaus aufweist, kann über ein Wärmenetz bereitgestellte Wärme in Abhängigkeit von einem jeweiligen Betriebsmodus besonders effizient eingesetzt werden. Vorteilhafterweise wird dabei immer der Wärmeträger auf genau dem Temperaturniveau verwendet, der unter Berücksichtigung des gesamten Wärmenetzes, d.h. einschließlich dessen Bereitstellung, das günstigste Nutzverhältnis aufweist und der somit in dem entsprechenden Betriebsmodus am effizientesten ist. Im Einzelnen bedeutet dies beispielsweise, dass zum Beheizen von Räumen bevorzugt der Wärmeträger auf dem mittleren Temperaturniveau anstatt des Wärmeträgers auf dem höheren Temperaturniveau verwendet wird.

Neben der durch die unterschiedlichen Temperaturniveaus, insbesondere dem mittleren Temperaturniveau und dem höheren Temperaturniveau, effizienten Wärmenutzung, ist durch die direkte Verbindung der Wärmeträgerzuleitung mit niederem Temperaturniveau und des Wärmeabnehmers auch eine Möglichkeit geschaffen, über den Wärmeabnehmer zu kühlen. Das Gebäudesystem ermöglicht damit eine weitgehende Klimatisierung eines Gebäudes, eines Gebäudeteils oder eines Haushalts, wobei in Abhängigkeit von Umweltbedingungen, insbesondere Außentemperaturen, entweder gekühlt oder geheizt wird.

Das Gebäudesystem umfasst damit zumindest die drei Betriebsmodi Kühlen, insbesondere Kühlen von Räumen, mit dem Wärmeträger auf dem niederen Temperaturniveau, Beheizen, insbesondere Beheizen von Räumen, mit dem Wärmeträger auf dem mittleren Temperaturniveau unter Einbeziehung der Wärmepumpe und Beheizen, insbesondere Beheizen von Räumen, mit dem Wärmeträger auf dem höheren Temperaturniveau unter Einbeziehung der Wärmepumpe.

Damit über die Wärmeträgerzuleitungen immer der jeweils geforderte Wärmeträger auf dem entsprechenden Temperaturniveau verfügbar ist, sind die Wärmeträgerzuleitungen des Gebäudesystems vorteilhafterweise jeweils an eine Wärmenetzleitung mit gleichem Temperaturniveau anschließbar. Das Wärmenetz verfügt damit gleich dem Gebäudesystem über jeweils mindestens eine Wärmenetzleitung auf dem höheren Temperaturniveau, eine Wärmenetzleitung auf dem mittleren Temperaturniveau und eine Wärmenetzleitung auf dem niederen Temperaturniveau.

Um Wärmeverluste zu minimieren, liegt das höhere Temperaturniveau in weiterer Ausgestaltung des Gebäudesystems vorteilhafterweise in einem Temperaturbereich zwischen 25 °C und 40 °C, insbesondere beträgt das höhere Temperaturniveau ca. 30 °C. Das mittlere Temperaturniveau liegt dann vorzugsweise in einem Temperaturbereich zwischen 10 °C und 20 °C, insbesondere beträgt das mittlere Temperaturniveau ca. 15 °C, und das niedere Temperaturniveau liegt dann vorzugsweise in einem Temperaturbereich zwischen 5 °C und 15 °C, insbesondere bei ca. 10 °C.

Nach einer Weiterbildung des Gebäudesystems ist vorgesehen, dass die Wärmeträgerzuleitung mit dem höheren Temperaturniveau unter Umgehung der Wärmepumpe über eine Bypassleitung und schaltbare Ventile mit dem Wärmeabnehmer verbunden ist. Die Umgehung der Wärmepumpe mit der Bypassleitung ermöglicht dann als weiteren Betriebsmodus ein direktes Beheizen, insbesondere direktes Beheizen von Räumen, mit dem Wärmeträger auf dem höheren Temperaturniveau. Ein solcher Betriebsmodus ist insbesondere für Übergangsjahreszeiten oder bei schlechtem Wetter im Sommer von Vorteil, wenn nur geringe Heizleistungen zum Beheizen, insbesondere von Räumen, benötigt werden. Der zusätzliche Kosten verursachende Betrieb der Wärmepumpe ist bei diesem Betriebsmodus nicht nötig, so dass unter den vorgenannten Bedingungen eine besonders kostengünstige Beheizung des Gebäudes, des Gebäudeteils oder des Haushalts möglich ist.

Um den Wärmeträger auf dem höheren Temperaturniveau über den Bypass direkt zum Wärmeabnehmer zu leiten, ist weiterhin vorgesehen, dass die Bypassleitung in Strömungsrichtung eines in dem Wärmeträgerkreislauf geführten Wärmeträgers vor dem Wärmeabnehmer und damit zwischen dem Kondensator der Wärmepumpe und dem Wärmeabnehmer in den Wärmeträgerkreislauf einmündet.

Nach einer Weiterbildung kann die Wärmeträgerzuleitung mit dem niederen Temperaturniveau zudem in die Bypassleitung einmünden und die Bypassleitung als gemeinsame Leitung für entweder die Wärmeträgerzuleitung mit dem höheren Temperaturniveau oder die Wärmeträgerzuleitung mit dem niederen Temperaturniveau dienen. Konstruktiv ist damit anstatt zwei Bypassleitungen nur eine einzige Bypassleitung vorzusehen, in welcher entweder Wärmeträger auf dem niederen Temperaturniveau oder Wärmeträger auf dem höheren Temperaturniveau unter Umgehung der Wärmepumpe direkt zu dem Wärmeabnehmer transportieren kann.

Besonders einfach kann diese gemeinsame Bypassleitung vorgesehen werden, wenn zumindest die Wärmeträgerzuleitungen auf dem niederen Temperaturniveau und auf dem höheren Temperaturniveau abschnittsweise in einer Sammelzuleitung zusammengeführt sind, wobei die Wärmeträgerzuleitungen einen gemeinsamen Durchflussmengenzähler und eine gemeinsame Temperaturmesseinrichtung aufweisen. Die Sammelzuleitung verzweigt sich dann auf einfache Weise in eine Wärmeträgerzuleitung zur Wärmepumpe und die gemeinsame Bypassleitung. Um sicherzustellen, dass der jeweils benötigte Wärmeträger der Bypassleitung oder der Wärmeträgerzuleitung zur Wärmepumpe zugeführt wird, ist wenigstens ein entsprechendes Ventil zum Schalten der Wärmeträgerleitungen vorzusehen, insbesondere weisen die Bypassleitung und die Wärmeträgerzuleitung zur Wärmepumpe jeweils ein schaltbares Ventil auf. Dadurch, dass die Sammelzuleitung einen gemeinsamen Durchflussmengenzähler und eine gemeinsame Temperaturmesseinrichtung aufweisen werden zudem nur wenige Messeinrichtungen zum Erfassen der durchströmenden Wärmeträger benötigt, so dass eine kostengünstige Lösung gegeben ist.

In Abhängigkeit von einem jeweiligen Betriebsmodus über wenigstens eine der Wärmeträgerzuleitungen zugeführter Wärmeträger muss, um einen energieeffizienten Betrieb des Gebäudesystems in einem Wärmenetz zu ermöglichen, in das Wärmenetz zurückgeleitet werden. Ein solcher Kreislauf des Wärmeträgers in dem Wärmenetz wird erfindungsgemäß dadurch sichergestellt, dass, sowohl dem Wärmeabnehmer als auch dem Verdampfer jeweils wenigstens eine Wärmeträgerrückleitung zugeordnet ist. Die Wärmeträgerrückleitungen sind dementsprechend an ein Wärmenetz anschließbar. Insbesondere sind die Wärmeträgerrückleitungen bei einem in ein Wärmenetz integrierten Gebäudesystem an das gleiche Wärmenetz angeschlossen wie die Wärmeträgerzuleitungen.

Um auch bei den Wärmeträgerrückleitungen möglichst wenige Armaturen zur Erfassung des durchströmenden Wärmeträgers vorsehen zu müssen, ist nach einer Weiterbildung vorgesehen, dass die Wärmeträgerrückleitung des Wärmeabnehmers und die Wärmeträgerrückleitung des Verdampfers zumindest abschnittsweise in einer Sammelrückleitung zusammengeführt sind, wobei die Wärmeträgerrückleitungen einen gemeinsamen Durchflussmengenzähler und eine gemeinsame Temperaturmesseinrichtung aufweisen. Für die Wärmeträgerrückleitungen ergeben sich damit die gleichen Vorteile wie für die Wärmeträgerzuleitungen.

Gemäß einer nächsten Weiterbildung weisen die Wärmeträgerrückleitungen oder die Sammelrückleitung das mittlere Temperaturniveau oder das niedere Temperaturniveau der Wärmeträgerzuleitungen auf und sind über wenigstens ein steuerbares Ventil mit Wärmenetzleitungen des Wärmenetzes mit entsprechendem Temperaturniveau verbindbar. Der in das Wärmenetz, insbesondere die Wärmenetzleitung des Wärmenetzes rückgeführte Wärmeträger kann damit ohne Beeinflussung des Temperaturniveaus in der jeweiligen Wärmenetzleitung in das Wärmenetz eingeleitet werden. Ob der Wärmeträger in der Wärmeträgerrückleitung oder in der Sammelrückleitung das mittlere Temperaturniveau oder das niedere Temperaturniveau aufweist ist wiederum abhängig von einem jeweiligen Betriebsmodus. Ein Betriebsmodus kann in Abhängigkeit vom Wärmebedarf aber auch unterschiedliche Temperaturniveaus bedingen. Die Steuerung des Gebäudesystems erfolgt aber immer so, dass ein in das Wärmenetz zurückzuleitender Wärmeträger das mittlere Temperaturniveau oder das niedere Temperaturniveau aufweist. Um dies zu erreichen, werden an verschiedenen Stellen des Gebäudesystems sowohl Durchflussmenge als auch Temperatur des jeweiligen Wärmeträgers erfasst und gegebenenfalls nachgeregelt.

Eine weitere Nutzung des vom Verdampfer zurückzuleitenden Wärmeträgers, insbesondere in ein Wärmenetz zurückzuleitenden Wärmeträgers, kann dadurch erfolgen, dass zumindest der Wärmeträgerrückleitung des Verdampfers ein Luftkühler zugeordnet ist. In dem Verdampfer abgekühlter Wärmeträger wird dann in einer nachgeordneten, zweiten Nutzungsstufe dem Luftkühler zugeführt. Der Luftkühler selbst ist in weiterer Ausgestaltung als Wärmetauscher ausgelegt, wobei von durch den Luftkühler hindurchströmender Luft Wärme auf den Wärmeträger übertragen werden kann.

Ein solcher Betriebsmodus, bei dem zurückzuleitender Wärmeträger über einen Luftkühler geführt wird, eignet sich insbesondere in Kombination mit einer Warmwasserbereitung. Für eine solche Warmwasserbereitung kann der Wärmeträgerkreislauf nach einer Weiterbildung unter Umgehung des Wärmeabnehmers eine Nebenleitung aufweisen, die über einen Warmwasserspeicher geführt ist. Über die Wärmepumpe erwärmter, kondensatorseitig abgeführter Wärmeträger kann dann über die Nebenleitung zu dem Warmwasserspeicher geleitet werden, so dass in dem Warmwasserspeicher befindliches Brauchwasser erwärmt wird. Mit dem zusätzlichen Warmwasserspeicher des Gebäudesystems kann somit zusätzlich zu der Klimatisierung des Gebäudes, des Gebäudeteiles des Haushaltes oder dergleichen auch erhitztes Brauchwasser bereitgestellt werden, so dass eine vollständige Wärmeversorgung des Gebäudes, des Gebäudeteiles, des Haushaltes oder dergleichen gegeben ist.

Auf einfache Weise kann die Nebenleitung in Strömungsrichtung eines in dem Wärmeträgerkreislauf geführten Wärmeträgers vor der Einmündung der Nebenleitung abzweigen und vor Abzweigung der Wärmeträgerrückleitung wieder in den Wärmeträgerkreislauf einmünden. Der im Wärmeträgerkreislauf geführte Wärmeträger kann dabei gemäß einer ersten Betriebsweise tatsächlich zwischen Kondensator und Warmwasserspeicher im Kreis gepumpt werden. Alternativ kann der zum Erwärmen des Brauchwassers im Warmwasserspeicher verwendete Wärmeträger gemäß einer zweiten Betriebsweise auch über die Wärmeträgerrückleitung des Wärmeabnehmers an ein angeschlossenes Wärmenetz abgegeben werden. Die Wärmeträgerrückleitung des Wärmeabnehmers ist daher vorteilhafterweise zwischen der Einmündung der Nebenleitung in den Wärmeträgerkreislauf und vor der Einmündung des Wärmeträgerkreislaufs in den Kondensator der Wärmepumpe angeordnet. Über die zum Kondensator hinführende Wärmeträgerzuleitung wird dann gemäß der zweiten Betriebsweise der Wärmeträger aus dem Wärmenetz in den Wärmeträgerkreislauf gefördert.

Um einen nochmals verbesserten Wirkungsgrad des Wärmeträgerkreislaufs in Kombination mit der Nebenleitung zu erreichen, können die Nebenleitung mit ihrem vom Warmwasserspeicher abgehenden Teil und der Wärmeträgerkreislauf mit seinem dem Wärmeabnehmer zuführenden Teil nach einer Weiterbildung derart miteinander in Verbindung stehen, dass die beiden Teile einen Wärmetauscher ausbilden. Insbesondere kann ein solcher Wärmetauscher zwischen der Nebenleitung und einem Wärmeabnehmerbypass ausgebildet sein, wobei der Wärmeabnehmerbypass eine den Kondensator umgehende Leitung des Wärmeträgerkreislaufs mit eigener Wärmeträgerpumpe darstellt.

Neben dem Gebäudesystem betrifft die Erfindung auch ein Wärmenetz zur Klimatisierung und Wärmeversorgung wenigstens eines Gebäudes oder eines Gebäudeteils, aufweisend wenigstens drei Wärmenetzleitungen auf unterschiedlichen Temperaturniveaus, von denen eine Wärmenetzleitung ein höheres Temperaturniveau, eine Wärmenetzleitung ein mittleres Temperaturniveau und eine Wärmenetzleitung ein niederes Temperaturniveau aufweist. Dieses Wärmenetz zeichnet sich dadurch aus, dass an die wenigstens drei Wärmenetzleitungen wenigstens ein vorgenanntes Gebäudesystem angeschlossen ist. Die Kombination des grundsätzlich bekannten Wärmenetzes mit drei Wärmenetzleitungen auf unterschiedlichen Temperaturniveaus mit dem erfindungsgemäßen Gebäudesystem ermöglicht einen besonders effizienten Energieeinsatz, da das Gebäudesystem in Abhängigkeit von einem jeweiligen Betriebsmodus nicht nur Verbraucher, sondern auch Erzeuger von Energie, insbesondere Wärme, ist. Insbesondere beim Kühlen eines Gebäudes oder beim Kühlen von Räumen eines Gebäudes kann dabei auch Wärmeträger auf einem höheren Temperaturniveau in das Wärmenetz eingespeist werden. Die Kombination und Einbeziehung vieler verschiedener Nutzer und Erzeuger, das heißt unter anderem einer größeren Anzahl an Gebäudesystemen, führt dann insgesamt auch gegenüber bekannten Wärmenetzen mit mehr als zwei Temperaturniveaus zu einem besonders effizienten System, das möglichst einen geringen Energieeinsatz erfordert.

Weiter betrifft die Erfindung auch ein Verfahren zur Klimatisierung und Wärmeversorgung wenigstens eines Gebäudes oder eines Gebäudeteils über wenigstens ein Wärmenetz mit dem vorgenannten Gebäudesystem. Dieses Verfahren zeichnet sich erfindungsgemäß dadurch aus, dass in Abhängigkeit davon, ob mit dem Gebäudesystem gekühlt oder gewärmt werden soll, der Wärmepumpe oder dem Wärmeabnehmer über eine Wärmeträgerzuleitung Wärmeträger zugeführt wird, dass Ventile in Wärmeträgerleitungen des Gebäudesystems so geschaltet werden, dass der Wärmepumpe Wärmeträger auf höherem Temperaturniveau oder auf mittlerem Temperaturniveau zugeführt wird, oder dass der Wärmepumpe Wärmeträger auf höherem Temperaturniveau und auf mittlerem Temperaturniveau zugeführt wird, oder dass dem Wärmeabnehmer Wärmeträger auf höherem Temperaturniveau oder auf niederem Temperaturniveau zugeführt wird.

Die jeweilige Verschaltung der Ventile in und zwischen den Wärmeträgerleitungen miteinander ermöglicht dabei eine gezielte Wärmeträgerführung innerhalb des Gebäudesystems und in Abhängigkeit von einem jeweiligen Betriebsmodus. Insbesondere werden die Ventile bei den jeweiligen Betriebsmodi so geschaltet, dass immer nur Wärmeträger auf einem der Temperaturniveaus, insbesondere auf einem einzigen der Temperaturniveaus, zugeführt und zum Kühlen oder Erwärmen genutzt wird.

Gemäß einer Weiterbildung des Verfahrens werden der Wärmeträger mit dem höheren Temperaturniveau, der Wärmeträger mit dem mittleren Temperaturniveau und der Wärmeträger mit dem niederen Temperaturniveau über ein Wärmenetz bereitgestellt, wobei die jeweiligen Wärmeträgerzuleitungen von entsprechenden Wärmenetzleitungen gleichen Temperaturniveaus gespeist werden. Die Versorgung des Gebäudesystems über Wärmenetzleitungen stellt sicher, dass immer ausreichend Wärmeträger auf einem jeweils benötigten Temperaturniveau verfügbar ist, um das Gebäudesystem in einem bestimmten Betriebsmodus betreiben zu können. Zudem muss der auf einem bestimmten Temperaturniveau benötigte Wärmeträger nicht vor Ort erzeugt werden.

Neben der Einspeisung von Wärmeträger aus dem Wärmenetz über die Wärmeträgerzuleitungen wird ein in dem Gebäudesystem genutzter Wärmeträger nach einer Weiterbildung wieder an das angeschlossene Wärmenetz abgegeben. Das Gebäudesystem oder wenigstens ein Teil des Gebäudesystems bildet somit in Abhängigkeit von einem jeweiligen Betriebsmodus verfahrensmäßig einen Kreislauf mit dem Wärmenetz, welches für die Bereitstellung und Abführung von für den Betrieb des Gebäudesystems benötigtem Wärmeträger dient. Ein zum Erwärmen genutzter Wärmeträger wird dann vorteilhafterweise auf einem niedrigeren Temperaturniveau in das Wärmenetz rückgeleitet und in die Wärmenetzleitung entsprechend entweder dem mittleren Temperaturniveau oder dem niederen Temperaturniveau eingespeist. Um dies zu erreichen, wird wenigstens einer der nachfolgenden Werte Durchflussmenge, Wärmeträgertemperatur und Strömungsgeschwindigkeit eines jeweiligen Wärmeträgers in dem Gebäudesystem geregelt.

Im Einzelnen ermöglichen die miteinander zu verschaltenden Ventile unter anderem die nachfolgend beschriebenen Betriebsmodi. Bei einem bevorzugten Betriebsmodus wird der Wärmeträger mit mittlerem Temperaturniveau dem Verdampfer der Wärmepumpe zugeführt, wobei Wärme aus dem Wärmeträger mit mittlerem Temperaturniveau in der Wärmepumpe genutzt wird, um einen Wärmeträger in dem Wärmeträgerkreislauf zu erwärmen, welcher genutzt wird um über den Wärmeträgerkreislauf den Wärmeabnehmer zu erwärmen. Dieser Betriebsmodus entspricht damit der Verfahrensweise einer herkömmlichen Wärmepumpe, um mit der Wärmepumpe beispielsweise Räume eines Gebäudes oder dergleichen zu beheizen. Der verdampferseitige Wärmeträger auf mittlerem Temperaturniveau und der kondensatorseitige Wärmeträger in dem Wärmeträgerkreislauf durchströmen die Wärmeträgerleitungen des Gebäudesystems dabei in vollständig voneinander getrennten Bereichen und stehen nur über den Kältemittelkreislauf der Wärmepumpe wärmeübertragend miteinander in Kontakt. Alternativ kann anstatt mit dem Wärmeträger mit mittlerem Temperaturniveau auf gleiche Weise auch mit dem Wärmeträger mit höherem Temperaturniveau verfahren werden.

Gemäß einem weiteren, bevorzugten Betriebsmodus wird der Wärmeträger mit höherem Temperaturniveau dem Kondensator der Wärmepumpe zugeführt und der Wärmeträger mit höherem Temperaturniveau wird in dem Kondensator erhitzt, um den Wärmeabnehmer oder einen Warmwasserspeicher mit Wärme zu beaufschlagen. Bei dieser Verfahrensweise wird der Wärmeträger mit höherem Temperaturniveau genutzt, um mittels der Wärmepumpe Warmwasser bereitzustellen oder wiederum das Beheizen von beispielsweise Räumen eines Gebäudes zu ermöglichen. Um den im Kondensator erhitzten Wärmeträger entweder dem Warmwasserspeicher oder dem Wärmeabnehmer zuzuführen, wird ein dem Kondensator in Strömungsrichtung des Wärmeträgers nachgeschaltetes Ventil entsprechend geschaltet.

Weiter kann gemäß diesem Betriebsmodus vorteilhafterweise ein Teilstrom des Wärmeträgers mit höherem Temperaturniveau abgezweigt werden und dem Verdampfer zugeführt werden, um den dem Kondensator zugeführten Teilstrom des Wärmeträgers mit höherem Temperaturniveau zu erhitzen. Die Wärmepumpe wird dann ausschließlich mit dem Wärmeträger auf dem höheren Temperaturniveau betrieben. Auf einfache Weise ist dann nur ein Ventil der Wärmeträgerzuleitung für den Wärmeträger auf dem höheren Temperaturniveau zu öffnen. Eine solche Betriebsweise eignet sich insbesondere für eine Kaltstartphase, um schnell und mit hohen Temperaturen Warmwasser bereitzustellen. Nach einer solchen Kaltstartphase wird die Wärmeträgerzuleitung zum Kondensator vorteilhafterweise geschlossen und das Gebäudesystem entsprechend der alternativen Ausführung des erstgenannten Betriebsmodus betrieben.

Gemäß einem alternativen Betriebsmodus kann der Verdampfer der Wärmepumpe auch mit Wärmeträger auf mittlerem Temperaturniveau betrieben werden, so dass der Wärmeträger auf dem höheren Temperaturniveau nur dem Kondensator zugeleitet wird.

Gemäß einem weiteren Betriebsmodus, ist vorgesehen, dass der Wärmeträger mit höherem Temperaturniveau unter Umgehung der Wärmepumpe über eine Bypassleitung des Gebäudesystems dem Wärmeabnehmer zugeführt wird. Dieser Betriebsmodus eignet sich besonders für Übergangsjahreszeiten und Schlechtwetterphasen, wenn auch über einen niedertemperierten Wärmeträger zwischen 25 °C von 40 °C, insbesondere mit ca. 30 °C, eine ausreichende Wärmemenge zum Beheizen von Räumen oder dergleichen bereitgestellt werden kann.

Auf gleiche Weise wie der Wärmeträger mit höherem Temperaturniveau kann vorteilhafterweise auch der Wärmeträger mit niederem Temperaturniveau unter Umgehung der Wärmepumpe über eine Bypassleitung des Gebäudesystems dem Wärmeabnehmer zugeführt werden. Über den Wärmeträger mit niederem Temperaturniveau, d.h. ca. 10 °C, kann dann eine Kühlung beispielsweise eines Gebäudes, eines Gebäudeteils oder eines Haushalts erfolgen. Der Wärmeabnehmer ermöglicht damit nach dem erfindungsgemäßen Verfahren aufgrund der verschiedenen betriebsweisen sowohl ein Kühlen als auch ein Beheizen und damit eine umfassende Klimatisierung.

Entsprechend dem zum Erwärmen genutzten Wärmeträger wird ein zum Kühlen genutzter Wärmeträger auf einem höheren Temperaturniveau in das Wärmenetz rückgeleitet - und in die Wärmenetzleitung entsprechend entweder dem mittleren Temperaturniveau oder dem höheren Temperaturniveau eingespeist.

Gemäß einem weiteren Betriebsmodus kann ein in dem Verdampfer heruntergekühlter Wärmeträger zudem verwendet werden, um Luft zu kühlen. Mit dem Gebäudesystem kann ein Gebäude, ein Gebäudeteil oder ein Haushalt somit nicht nur über den Wärmeabnehmer gekühlt werden, sondern auch über eine direkte Luftkühlung. Einzige Bedingung ist, dass in der Wärmepumpe am Kondensator erzeugte Wärme abgenommen wird, beispielsweise über einen Warmwasserspeicher oder das Wärmenetz.

Ein Ausführungsbeispiel der Erfindung, aus dem sich weitere erfindungsgemäße Merkmale ergeben können, ist in der Zeichnung dargestellt. Es zeigen:
- Figur 1:: eine schematische Darstellung eines erfindungsgemäßen Gebäudesystems gemäß einem ersten Betriebsmodus;
- Figur 2:: die schematische Darstellung des erfindungsgemäßen Gebäudesystems gemäß einem zweiten Betriebsmodus;
- Figur 3:: die schematische Darstellung des erfindungsgemäßen Gebäudesystems gemäß einem dritten Betriebsmodus;
- Figur 4:: die schematische Darstellung des erfindungsgemäßen Gebäudesystems gemäß einem vierten Betriebsmodus;
- Figur 5:: die schematische Darstellung des erfindungsgemäßen Gebäudesystems gemäß einem fünften Betriebsmodus;
- Figur 6:: die schematische Darstellung des erfindungsgemäßen Gebäudesystems gemäß einem sechsten Betriebsmodus;
- Figur 7:: die schematische Darstellung des erfindungsgemäßen Gebäudesystems gemäß einem siebten Betriebsmodus; und
- Figur 8:: die schematische Darstellung des erfindungsgemäßen Gebäudesystems gemäß einem achten Betriebsmodus.

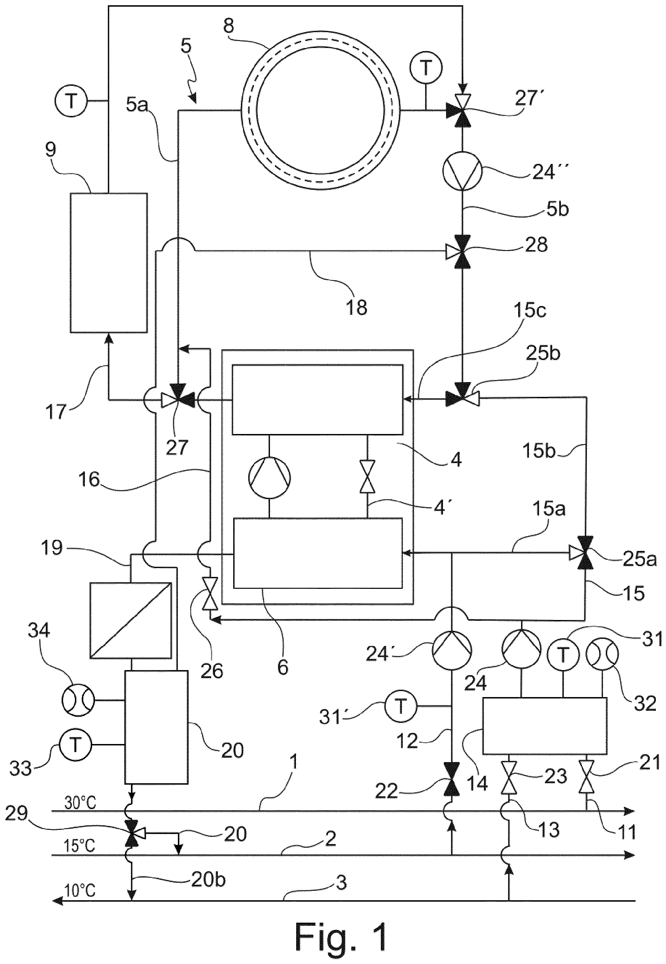

Aus der schematischen Darstellung gemäß Figur 1 bis Figur 8 ist der Aufbau eines erfindungsgemäßen Gebäudesystems sowie eines ausschnittsweise dargestellten Wärmenetzes, an das das erfindungsgemäße Gebäudesystem angeschlossen ist, zu entnehmen. Gleiche Teile des Gebäudesystems und des Wärmenetzes sind in allen Figuren 1 bis 8 der Zeichnung mit gleichen Bezugszeichen versehen, wobei sich die einzelnen Figuren lediglich in der Verschaltung von Ventilen miteinander und damit in Strömungsrichtungen von in dem Gebäudesystem strömendem Wärmeträger unterscheiden.

Das Wärmenetz weist insgesamt drei Wärmenetzleitungen 1, 2, 3 auf. Die Wärmenetzleitung 1 stellt einen Wärmeträger auf einem höheren Temperaturniveau von ca. 30 °C bereit. Die Wärmenetzleitung 2 stellt einen Wärmeträger auf einem mittleren Temperaturniveau von ca. 15 °C bereit. Die Wärmenetzleitung 3 stellt einen Wärmeträger auf einem niederen Temperaturniveau von 10 °C bereit. An jede der Wärmenetzleitungen 1, 2, 3 ist eine Wärmeträgerzuleitung 11, 12, 13 des erfindungsgemäßen Gebäudesystems angeschlossen. Die Wärmeträgerzuleitungen 11, 12, 13 weisen das gleiche Temperaturniveau wie die Wärmenetzleitung 1, 2, 3 auf, an die sie angeschlossen sind. Die an die Wärmenetzleitung 1 angeschlossene Wärmeträgerzuleitung 11 weist dementsprechend das höhere Temperaturniveau von ca. 30 °C auf. Die an die Wärmenetzleitung 2 angeschlossene Wärmeträgerzuleitung 12 weist dementsprechend das mittlere Temperaturniveau von ca. 15 °C auf. Die an die Wärmenetzleitung 3 angeschlossene Wärmeträgerzuleitung 13 weist dementsprechend das niedere Temperaturniveau von ca. 10 °C auf. Jede Wärmeträgerzuleitung 11, 12, 13 weist ein Absperrventil 21, 22, 23 auf. Weiter sind den Wärmeträgerzuleitungen 11, 12, 13 jeweils Temperaturmesseinrichtungen 31, 31' zugeordnet.

Die Wärmeträgerzuleitungen 11, 13 sind in Strömungsrichtung des jeweiligen, dem Gebäudesystem zu zuleitenden Wärmeträgers hinter den Absperrventilen 21, 23 zu einer Sammelzuleitung 14 zusammengefasst, der ein Durchflussmengenzähler 32 zugeordnet ist. Um einen für einen bestimmten Betriebsmodus benötigten Wärmeträger durch die Wärmeträgerzuleitungen 11, 12, 13 bzw. die Sammelzuleitung 14 fördern zu können, sind in der Wärmeträgerzuleitung 12 und in der Sammelzuleitung 14 jeweils Wärmeträgerpumpen 24, 24' vorgesehen.

Die Sammelzuleitung 14 verzweigt sich im weiteren Verlauf in eine Wärmeträgerzuleitung 15, die zu einer Wärmepumpe 4 führt, und in eine Bypassleitung 16, die in einen Wärmeträgerkreislauf 5 einmündet. Sowohl die Bypassleitung 16 als auch die Wärmeträgerzuleitung 15 sind gegenüber der Sammelzuleitung 14 über ein Absperrventil 26 bzw. ein Mischer 25a absperrbar, wobei sich die Wärmeträgerzuleitung 15 an dem Mischer 25a in eine Teilleitung 15a und eine Teilleitung 15b auftrennt. Die Teilleitung 15a führt zu einem Verdampfer 6 der Wärmepumpe 4 und die Teilleitung 15b ist mit einem Kondensator 7 der Wärmepumpe 4 verbunden. Der Verdampfer 6 und der Kondensator 7 stehen über einen Kältemittelkreislauf 4' der Wärmepumpe 4 miteinander in Verbindung. In die Teilleitung 15a mündet zudem die Wärmeträgerzuleitung 12 für Wärmeträger auf dem mittleren Temperaturniveau.

Der Wärmeträgerkreislauf 5 ist zwischen dem Kondensator 7 und einem Wärmeabnehmer 8, insbesondere einem Heizungskreislauf, ausgebildet, wobei der Wärmeträgerkreislauf 5 mit seinem in den Kondensator 7 einmündenden Teilstück 15c über ein Dreiwegeventil 25b mit der Teilleitung 15b zusammengeführt ist. In dem Wärmeträgerkreislauf 5 kann mittels einer Wärmeträgerpumpe 24" Wärmeträger in einem Abschnitt 5a vom Kondensator 7 zum Wärmeabnehmer 8 und in einem Abschnitt 5b vom Wärmeabnehmer 8 zum Kondensator 7 gefördert werden, so dass eine Strömungsrichtung des Wärmeträgers in dem Wärmeträgerkreislauf 5 vorgegeben ist. An den Wärmeträgerkreislauf 5 ist weiter eine Nebenleitung 17 angeschlossen. Diese Nebenleitung 17 wird unter Umgehung des Wärmeabnehmers 8 an einem ersten Dreiwegeventil 27 in dem Abschnitt 5a aus dem Wärmeträgerkreislauf 5 ausgekoppelt und an einem zweiten Dreiwegeventil 27' in dem Abschnitt 5b wieder in den Wärmeträgerkreislauf eingekoppelt. Die Nebenleitung 17 führt über einen Warmwasserspeicher 9. Um Wärmeträger sowohl über den Wärmeabnehmer 8 an dem Wärmeträgerkreislauf 5 als auch über den Warmwasserspeicher 9 an der Nebenleitung 17 fördern zu können, ist die Wärmeträgerpumpe 24" in dem Abschnitt 5b des Wärmeträgerkreislaufs 5 zwischen dem Dreiwegeventil 27' und dem Dreiwegeventil 25b angeordnet. Die Bypassleitung 16 mündet zwischen dem Dreiwegeventil 27' und dem Wärmeabnehmer 8 in den Wärmeträgerkreislauf 5.

Zwischen der Wärmeträgerpumpe 24" und dem Dreiwegeventil 25b ist über ein Dreiwegeventil 28 eine erste Wärmeträgerrückleitung 18 an den Wärmeträgerkreislauf 5 angeschlossen. Eine zweite Wärmeträgerrückleitung 19 ist rücklaufseitig an den Kondensator 6 angeschlossen. Diese beiden Wärmeträgerrückleitungen 18, 19 münden in eine gemeinsame Sammelrückleitung 20. Der Sammelrückleitung 20 sind dann eine Temperaturmesseinrichtung 33 und ein Durchflussmengenzähler 34 zugeordnet, um einen durch die Sammelrückleitung 20 strömenden Wärmeträger zu erfassen. Die Sammelrückleitung 20 verzweigt sich im weiteren Verlauf an einem Dreiwegeventil 29, wobei von dem Dreiwegeventil 29 zwei Anschlussabschnitte 20a, 20b abgehen. Der Anschlussabschnitt 20a ist an die Wärmenetzleitung 2 auf dem mittleren Temperaturniveau angeschlossen und der Anschlussabschnitt 20b ist an die Wärmenetzleitung 3 auf dem niederen Temperaturniveau angeschlossen. Der vom Verdampfer 6 abgehenden Wärmeträgerrückleitung 19 ist weiterhin ein Luftkühler 10 zugeordnet.

Gemäß der Verschaltung der Ventile in Figur 1, die einen ersten Betriebsmodus darstellen, wird aus der Wärmenetzleitung 2 Wärmeträger auf dem mittleren Temperaturniveau mit 15 °C entnommen. Der Wärmeträger wird mittels der Wärmeträgerpumpe 24' über die Wärmeträgerzuleitung 12 und das Absperrventil 22 dem Verdampfer 6 zugeführt. In der Wärmepumpe 4 wird der dem Verdampfer 6 zugeführte Wärmeträger auf dem mittleren Temperaturniveau genutzt, um über den Kältemittelkreislauf 4' einen Wärmeträger in dem Kondensator 7 zu erwärmen. Der in dem Verdampfer 6 genutzte Wärmeträger wird dann über Wärmeträgerrückleitung 19, die Sammelrückleitung 20 sowie den Anschlussabschnitt 20b der Wärmenetzleitung 3 auf dem niederen Temperaturniveau zugeführt. Der in dem Kondensator 7 erwärmte Wärmeträger wird in diesem ersten Betriebsmodus mit der Wärmeträgerpumpe 24" in dem Wärmeträgerkreislauf 5 im Kreis geführt und erwärmt den Wärmeabnehmer 8.

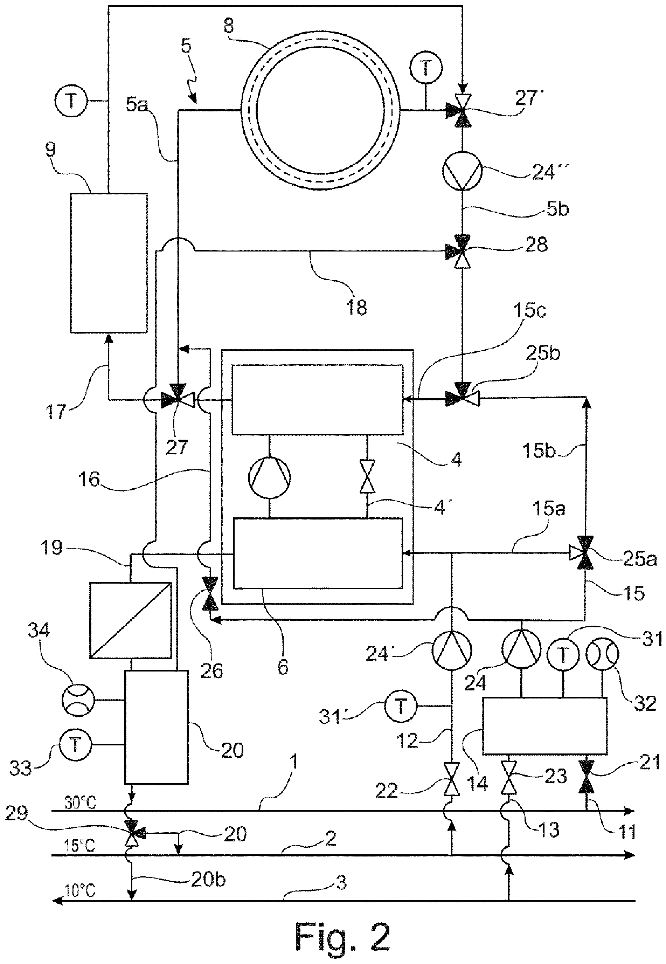

Gemäß dem in Figur 2 dargestellten zweiten Betriebsmodus wird aus der Wärmenetzleitung 1 Wärmeträger auf dem höheren Temperaturniveau mit 30 °C entnommen. Dieser Wärmeträger wird dann mittels der Wärmeträgerpumpen 24, 24" über die Wärmeträgerzuleitung 11, das Absperrventil 21 und die Bypassleitung 16 mit dem Absperrventil 26 in den Wärmeträgerkreislauf 5 geleitet. Der Wärmeträger auf dem höheren Temperaturniveau erwärmt dann unter Umgehung der Wärmepumpe 4 den Wärmeabnehmer 8. Über das Dreiwegeventil 28, die Wärmeträgerrückleitung 18, die Sammelrückleitung 20 sowie den Anschlussabschnitt 20a wird der genutzte Wärmeträger schließlich der Wärmenetzleitung 2 auf dem mittleren Temperaturniveau zugeführt.

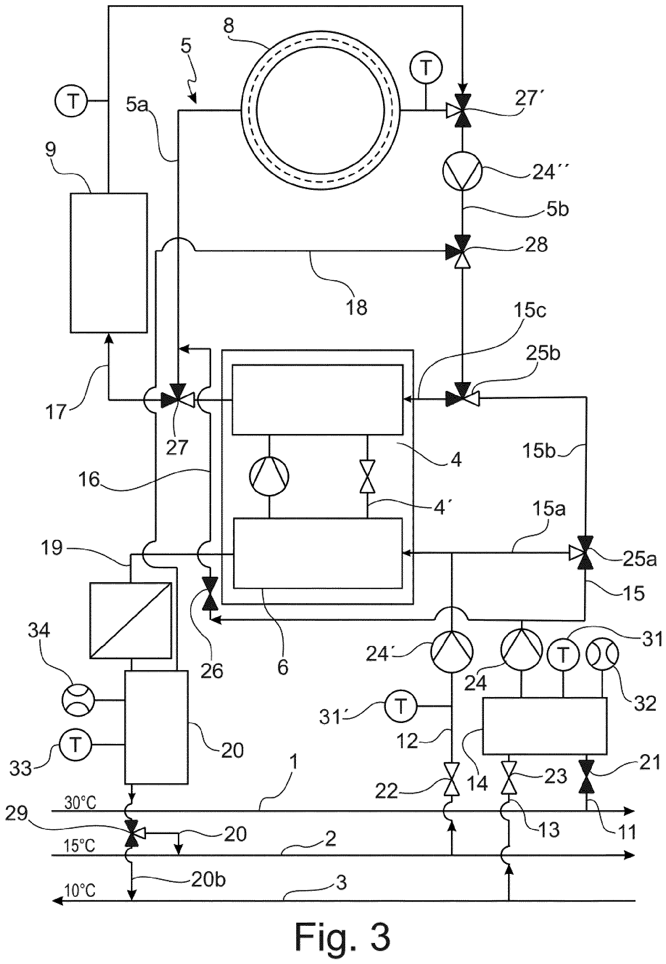

Ein dritter Betriebsmodus gemäß Figur 3 entspricht im Wesentlichen dem zweiten Betriebsmodus gemäß Figur 2. Der einzige Unterschied besteht darin, dass anstatt des Wärmeabnehmers 8 über die Dreiwegeventile 27, 27' die Nebenleitung 17 mit dem Warmwasserspeicher 9 angesteuert wird. Der durch die Nebenleitung 17 und über den Warmwasserspeicher 9 strömende Wärmeträger auf dem höheren Temperaturniveau erwärmt dann den Warmwasserspeicher 9 und nicht den Wärmeabnehmer 8.

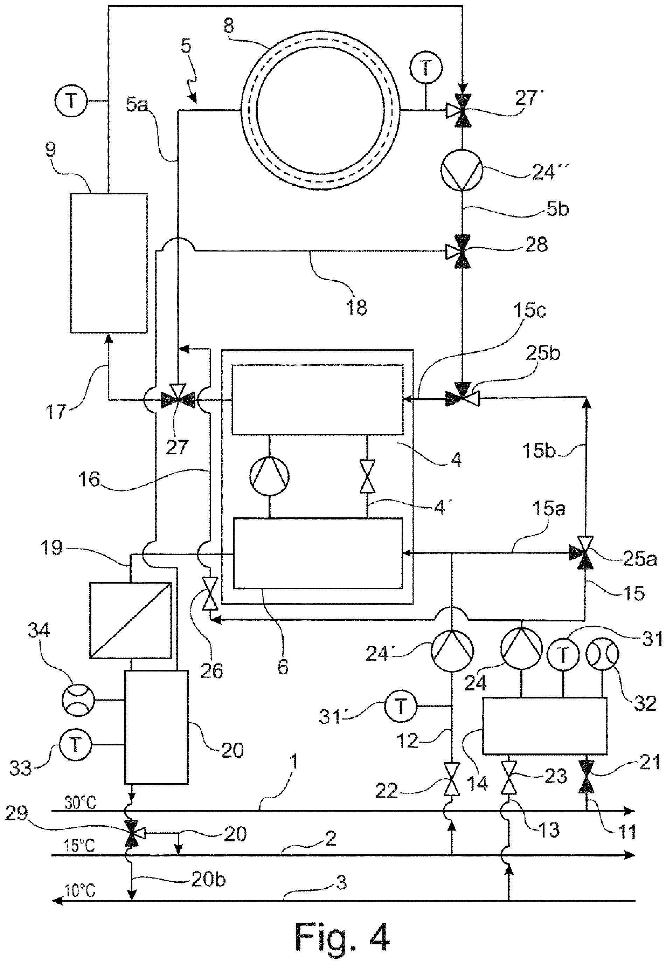

In Figur 4 wird der Wärmeträger auf höherem Temperaturniveau aus Wärmenetzleitung 1 gemäß einem weiteren Betriebsmodus über die Wärmeträgerzuleitung 15 und die Teilleitung 15a dem Verdampfer 6 der Wärmepumpe 4 zugeführt und über die Wärmeträgerrückleitung 19 sowie das entsprechend gestellte Dreiwegeventil 29 und den Anschlussabschnitt 20b in die Wärmenetzleitung 3 eingeleitet. In der Wärmepumpe 4 wird die Wärme des dem Verdampfer 6 zugeführten Wärmeträgers auf dem höheren Niveau genutzt, um einen zwischen der Nebenleitung 17 und dem Kondensator 7 zirkulierenden Wärmeträger zu erwärmen. Der zwischen der Nebenleitung 17 und dem Kondensator 7 zirkulierende Wärmeträger dient der Warmwasserbereitstellung im Warmwasserspeicher 9.

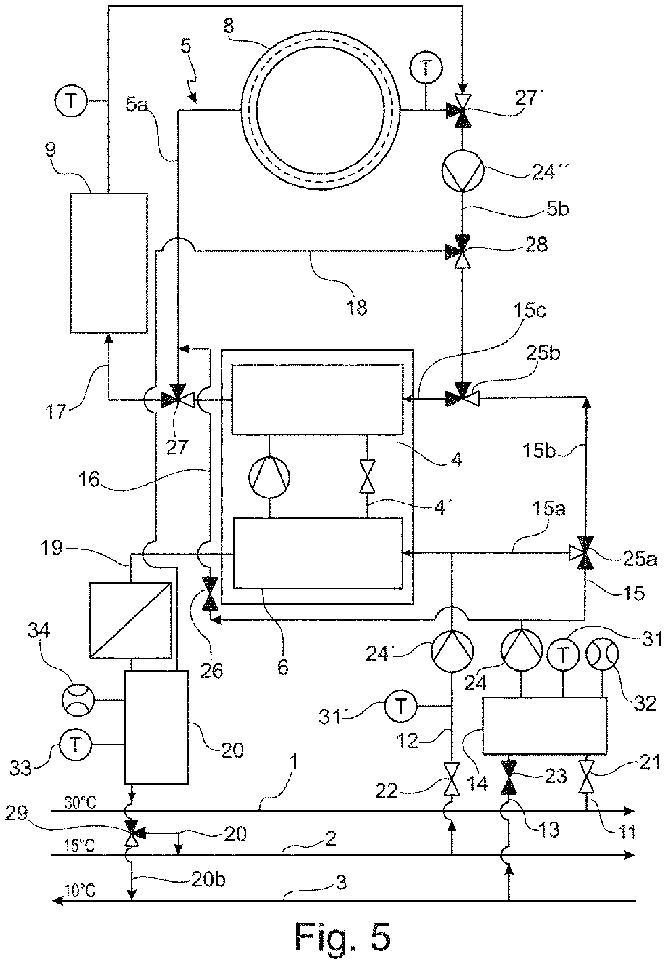

Gemäß Figur 5 ist ein Betriebsmodus dargestellt, bei dem aus der Wärmenetzleitung 3 Wärmeträger auf dem niederen Temperaturniveau entnommen und zum Kühlen verwendet wird. Der Wärmeträger auf dem niederen Temperaturniveau wird dazu mittels der Wärmeträgerpumpe 24 über die Wärmeträgerzuleitung 13 mit dem Absperrventil 23 und die Bypassleitung 16 mit dem Absperrventil 26 unter Umgehung der Wärmepumpe 4 dem Wärmeträgerkreislauf 5 zugeführt. In dem Wärmeträgerkreislauf 5 wird der Wärmeträger auf dem niedrigen Temperaturniveau dem Wärmeabnehmer 8 zugeleitet und über das Dreiwegeventil 28 sowie die Wärmeträgerrückleitung 18 in die Wärmenetzleitung 2 eingeleitet. Der Wärmeträger mit dem niedrigen Temperaturniveau kühlt ein Gebäude, einen Gebäudeteil oder einen Haushalt dann über den Wärmeabnehmer 8.

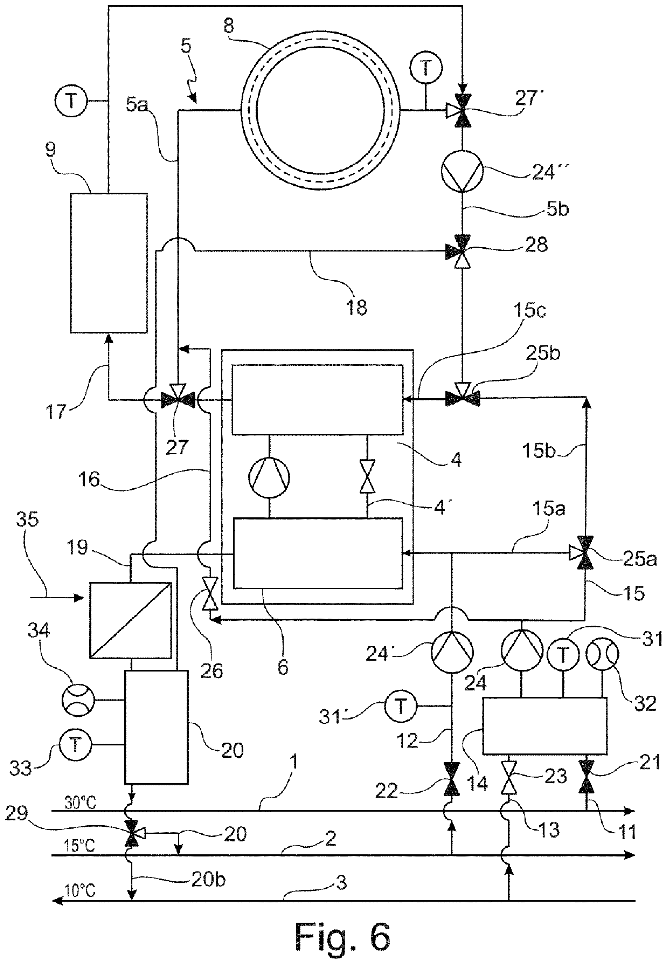

Einen Betriebsmodus, bei dem einerseits gekühlt und andererseits Warmwasser bereitgestellt wird, zeigt Figur 6. Für diesen Betriebsmodus wird einerseits Wärmeträger auf dem mittleren Temperaturniveau aus der Wärmenetzleitung 2 entnommen und andererseits Wärmeträger auf dem höheren Temperaturniveau aus der Wärmenetzleitung 1 entnommen. Der Wärmeträger auf dem mittleren Temperaturniveau durchströmt das Gebäudesystem dabei entsprechend dem ersten Betriebsmodus. Einziger Unterschied zum ersten Betriebsmodus ist, dass der Luftkühler 10 von Luft 35 angeströmt wird, wobei die Luft 35 heruntergekühlt wird und zum Kühlen eines Gebäudes, Gebäudeteiles oder eines Haushalts oder dergleichen genutzt werden kann.

In einer Variante des Betriebsmodus gemäß Figur 6 kann auch das Absperrventil 22 geschlossen werden und der Wärmeträger an dem Mischer 25a auf zwei Teilströme aufgeteilt werden. Diese Variante ist besonders für eine Startphase interessant.

Der Wärmeträger auf dem höheren Temperaturniveau wird zeitgleich über das Mischer 25a und die Wärmeträgerzuleitungen 15b, 15c dem Kondensator 7 der Wärmepumpe 4 zugeleitet. In dem Kondensator 7 wird der Wärmeträger auf dem höheren Temperaturniveau zusätzlich erwärmt und über die Nebenleitung 17 zu dem Warmwasserspeicher 9 geleitet, so dass der Warmwasserspeicher 9 erwärmt wird. Entsprechend dem dritten Betriebsmodus gemäß Figur 3 wird der zusätzlich erwärmte Wärmeträger auf dem höheren Temperaturniveau nach dessen Nutzung zurückgeleitet. In der Sammelrückleitung 20 vermischen sich die aus den Wärmenetzleitungen 1 und 2 zugeführten Wärmeträger miteinander und werden dann entsprechend ihrer mit der Temperaturmesseinrichtung 33 gemessenen Mischtemperatur, die dem mittleren Temperaturniveau entspricht, in die Wärmenetzleitung 2 eingeleitet. Eine solche Betriebsweise eignet sich ins besondere während einer Start- oder Anlaufphase des Gebäudesystems.

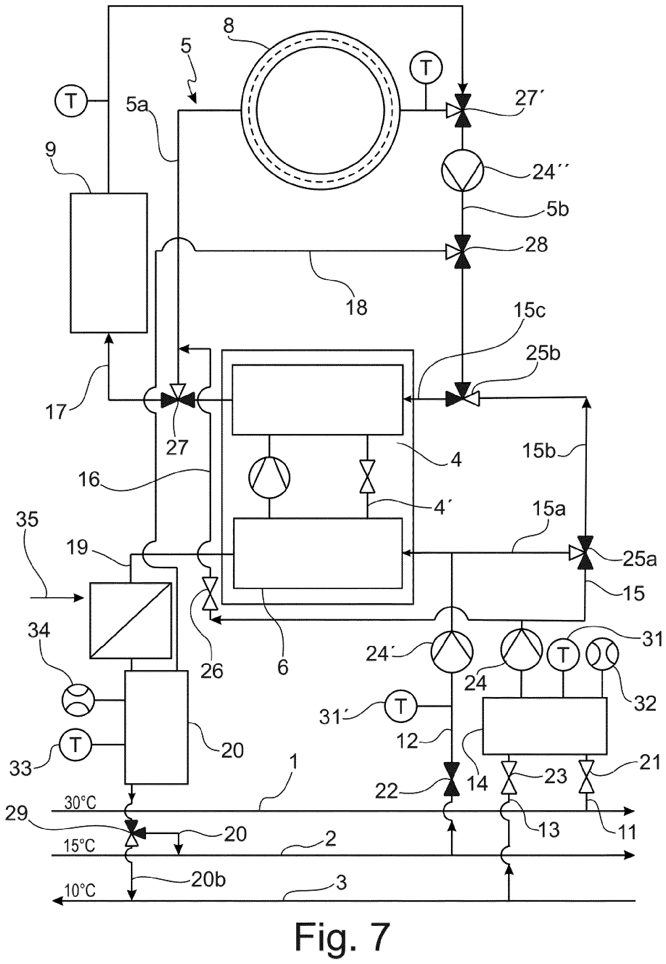

Der Betriebsmodus gemäß Figur 7 nutzt Wärmeträger auf dem mittleren Temperaturniveau auf gleiche Weise wie in dem Betriebsmodus gemäß Figur 6. Diese Nutzung des Wärmeträgers auf dem mittleren Temperaturniveau ist kombiniert mit dem zwischen der Nebenleitung 17 und dem Kondensator 7 zirkulierenden Wärmeträger gemäß dem Betriebsmodus in Figur 4. Der Betriebsmodus gemäß Figur 7 ermöglicht somit, wie auch der Betriebsmodus gemäß Figur 6, die Bereitstellung von Warmwasser im Warmwasserspeicher 9 und die Kühlung über gekühlte Luft 35 aus dem Luftkühler 10. Wesentlicher Unterschied zum Betriebsmodus gemäß Figur 6 ist, dass der Betriebsmodus gemäß Figur 7 einen regulären Betrieb darstellt und weniger für eine Start- oder Anlaufphase des Gebäudesystems geeignet ist.

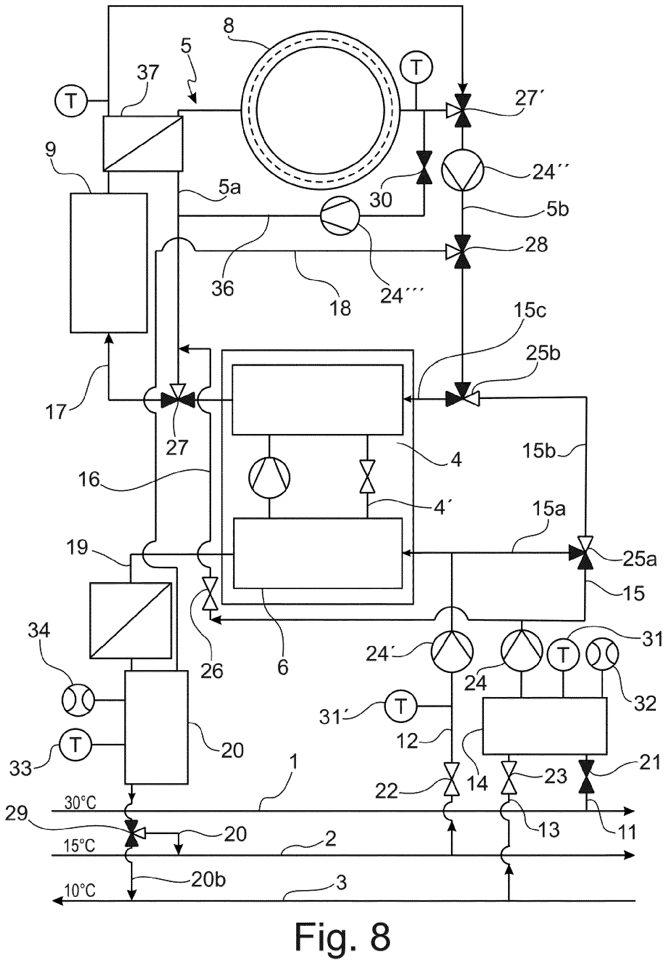

Figur 8 zeigt einen weiteren Betriebsmodus. Bei diesem wird der Wärmeträger auf dem höheren Temperaturniveau aus der Wärmenetzleitung 1 entnommen und entsprechend Figur 4 genutzt, um einen zwischen der Nebenleitung 17 und dem Kondensator 7 zirkulierenden Wärmeträger zu erwärmen. Ergänzend zu Figur 4 weist das Gebäudesystem in Figur 8 einen Wärmeabnehmerbypass 36 mit einer Wärmeträgerpumpe 24‴, einem Wärmetauscher 37 sowie einem Absperrventil 30 auf. In dem Wärmetauscher 37 sind der Wärmeabnehmerbypass 36 und die Nebenleitung 17 mit ihrem vom Warmwasserspeicher 9 wegführenden Abschnitt wärmeübertragend miteinander verbunden. Zum Bereitstellen von Warmwasser im Warmwasserspeicher 9 genutzter Wärmeträger wird dann gemäß dem Betriebsmodus in Figur 8 zusätzlich genutzt, um einen zwischen dem Wärmeabnehmer 8 und dem Wärmeabnehmerbypass 36 zirkulierenden Wärmeträger zu erwärmen. Der zwischen dem Wärmeabnehmer 8 und dem Wärmeabnehmerbypass 36 zirkulierende Wärmeträger erwärmt dann wiederum den Wärmeabnehmer 8.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Gebäudesystem zur Klimatisierung und Wärmeversorgung wenigstens eines Gebäudes oder eines Gebäudeteils über wenigstens ein Wärmenetz mit wenigstens einer Wärmepumpe (4), die einen Verdampfer (6), einen Kondensator (7) und einen zwischen dem Verdampfer (6) und dem Kondensator (7) ausgebildeten Kältemittelkreislauf (4') aufweist,
mit wenigstens einem Wärmeabnehmer (8), der kondensatorseitig über einen zwischen dem Wärmeabnehmer (8) und dem Kondensator (7) der Wärmepumpe (4) ausgebildeten Wärmeträgerkreislauf (5) wärmeübertragend mit dem Kondensator (7) der Wärmepumpe (4) verbunden ist, und
mit zum Anschluss an das Wärmenetz vorgesehenen Wärmeträgerleitungen des Gebäudesystems,
wobei das Gebäudesystem zulaufseitig wenigstens drei Wärmeträgerzuleitungen (11, 12, 13) auf unterschiedlichen Temperaturniveaus aufweist, von denen eine Wärmeträgerzuleitung (11) ein höheres Temperaturniveau, eine Wärmeträgerzuleitung (12) ein mittleres Temperaturniveau und eine Wärmeträgerzuleitung (13) ein niederes Temperaturniveau aufweist,
**dadurch gekennzeichnet,**
**dass** das Gebäudesystem steuerbare Ventile aufweist, über welche die drei Wärmeträgerzuleitungen (11, 12, 13) mit den unterschiedlichen Temperaturniveaus zulaufseitig jeweils ansteuerbar sind, wobei über die steuerbaren Ventile die jeweilige Wärmeträgerdurchflussmenge der Wärmeträgerzuleitungen (11, 12, 13) regelbar ist,
**dass** der Verdampfer (6) zulaufseitig zumindest mit der Wärmeträgerzuleitung (11) auf dem höheren Temperaturniveau und mit der Wärmeträgerzuleitung (12) auf dem mittleren Temperaturniveau verbunden ist,
**dass** die Wärmeträgerzuleitung (13) auf dem niederen Temperaturniveau mit dem Wärmeabnehmer (8) verbunden ist, und
**dass** das Gebäudesystem ein die Wärmeträgerzuleitung (11) verzweigendes Ventil aufweist, über welches die Wärmeträgerzuleitung (11) auf dem höheren Temperaturniveau zulaufseitig mit dem Kondensator (7) der Wärmepumpe (4) verbunden ist.

2. Gebäudesystem nach Anspruch 1, **dadurch gekennzeichnet, dass** die Wärmeträgerzuleitungen (11, 12, 13) des Gebäudesystems jeweils an eine Wärmenetzleitung (1, 2, 3) mit gleichem Temperaturniveau anschließbar sind.

3. Gebäudesystem nach einem der Ansprüche 1 oder 2, **dadurch gekennzeichnet, dass** das Gebäudesystem eine Bypassleitung (16) und schaltbare Ventile aufweist und dass die Wärmeträgerzuleitung (11) mit dem höheren Temperaturniveau unter Umgehung der Wärmepumpe (4) über die Bypassleitung (16) und die schaltbaren Ventile mit dem Wärmeabnehmer (8) verbunden ist.

4. Gebäudesystem nach Anspruch 3, **dadurch gekennzeichnet, dass** die Bypassleitung (16) in Strömungsrichtung eines in dem Wärmeträgerkreislauf (5) geführten Wärmeträgers vor dem Wärmeabnehmer (8) und damit zwischen dem Kondensator (7) der Wärmepumpe (4) und dem Wärmeabnehmer (8) in den Wärmeträgerkreislauf (5) einmündet.

5. Gebäudesystem nach einem der Ansprüche 3 oder 4, **dadurch gekennzeichnet, dass** die Wärmeträgerzuleitung (13) mit dem niederen Temperaturniveau in die Bypassleitung (16) einmündet und die Bypassleitung (16) damit als gemeinsame Leitung für entweder die Wärmeträgerzuleitung (11) mit dem höheren Temperaturniveau oder die Wärmeträgerzuleitung (13) mit dem niederen Temperaturniveau dient.

6. Gebäudesystem nach einem der Ansprüche 1 bis 5, **dadurch gekennzeichnet, dass** das Gebäudesystem eine Sammelzuleitung (14) aufweist, in welcher zumindest die Wärmeträgerzuleitungen (11, 13) auf dem niederen Temperaturniveau und auf dem höheren Temperaturniveau abschnittsweise zusammengeführt sind, wobei die Wärmeträgerzuleitungen (11, 13) einen gemeinsamen Durchflussmengenzähler (32) und eine gemeinsame Temperaturmesseinrichtung (31) aufweisen.

7. Gebäudesystem nach einem der Ansprüche 1 bis 6, **dadurch gekennzeichnet, dass** das Gebäudesystem sowohl wenigstens eine dem Wärmeabnehmer (8) zugeordnete Wärmeträgerrückleitung (18) als auch wenigstens eine dem Verdampfer (6) zugeordnete Wärmeträgerrückleitung (19) aufweist.

8. Gebäudesystem nach Anspruch 7, **dadurch gekennzeichnet, dass** das Gebäudesystem eine Sammelrückleitung (20) aufweist, in welcher die Wärmeträgerrückleitung (18) des Wärmeabnehmers (8) und die Wärmeträgerrückleitung (19) des Verdampfers (6) zumindest abschnittsweise zusammengeführt sind, wobei die Wärmeträgerrückleitungen (18, 19) einen gemeinsamen Durchflussmengenzähler (34) und eine gemeinsame Temperaturmesseinrichtung (33) aufweisen.

9. Gebäudesystem nach einem der Ansprüche 7 oder 8, **dadurch gekennzeichnet, dass** die Wärmeträgerrückleitungen (18, 19) oder die Sammelrückleitung (20) für das mittlere Temperaturniveau oder für das niedere Temperaturniveau der Wärmeträgerzuleitungen (12, 13) vorgesehen sind und über wenigstens ein steuerbares Ventil mit Wärmenetzleitungen (2, 3) des Wärmenetzes mit entsprechendem Temperaturniveau verbindbar sind.

10. Gebäudesystem nach einem der Ansprüche 7 bis 9, **dadurch gekennzeichnet, dass** das Gebäudesystem einen der Wärmeträgerrückleitung (19) des Verdampfers (6) zugeordneten Luftkühler (10) aufweist.

11. Gebäudesystem nach einem der Ansprüche 1 bis 10, **dadurch gekennzeichnet, dass** der Wärmeträgerkreislauf (5) unter Umgehung des Wärmeabnehmers (8) eine Nebenleitung (17) aufweist und dass das Gebäudesystem einen Warmwasserspeicher (9) aufweist, über welchen die Nebenleitung (17) geführt ist.

12. Gebäudesystem nach Anspruch 11, **dadurch gekennzeichnet, dass** die Nebenleitung (17) in Strömungsrichtung eines in dem Wärmeträgerkreislauf (5) geführten Wärmeträgers vor der Einmündung der Nebenleitung (17) abzweigt und vor Abzweigung der Wärmeträgerrückleitung (18) wieder in den Wärmeträgerkreislauf (5) einmündet.

13. Gebäudesystem nach einem der Ansprüche 11 oder 12, **dadurch gekennzeichnet, dass** die Nebenleitung (17) mit ihrem vom Warmwasserspeicher (9) abgehenden Teil und der Wärmeträgerkreislauf (5) mit seinem dem Wärmeabnehmer (8) zuführenden Teil derart miteinander in Verbindung stehen, dass die beiden Teile einen Wärmetauscher (37) ausbilden.

14. Wärmenetz zur Klimatisierung und Wärmeversorgung wenigstens eines Gebäudes oder eines Gebäudeteils, aufweisend wenigstens drei Wärmenetzleitungen (1, 2, 3) für unterschiedliche Temperaturniveaus, von denen eine Wärmenetzleitung (1) für ein höheres Temperaturniveau, eine Wärmenetzleitung (2) für ein mittleres Temperaturniveau und eine Wärmenetzleitung (3) für ein niederes Temperaturniveau vorgesehen ist,
**dadurch gekennzeichnet,**
**dass** an die drei Wärmenetzleitungen (1, 2, 3) wenigstens ein Gebäudesystem nach einem der Ansprüche 1 bis 13 angeschlossen ist.

15. Verfahren zur Klimatisierung und Wärmeversorgung wenigstens eines Gebäudes oder eines Gebäudeteils über wenigstens ein Wärmenetz mit dem Gebäudesystem nach einem der Ansprüche 1 bis 13,
**dadurch gekennzeichnet,**
**dass** in Abhängigkeit davon, ob mit dem Gebäudesystem gekühlt oder gewärmt werden soll, der Wärmepumpe (4) oder dem Wärmeabnehmer (8) über eine Wärmeträgerzuleitung (11, 12, 13) Wärmeträger zugeführt wird, dass Ventile in Wärmeträgerleitungen des Gebäudesystems so geschaltet werden, dass der Wärmepumpe (4) Wärmeträger auf höherem Temperaturniveau oder auf mittlerem Temperaturniveau zugeführt wird, oder dass der Wärmepumpe (4) Wärmeträger auf höherem Temperaturniveau und auf mittlerem Temperaturniveau zugeführt wird, oder dass dem Wärmeabnehmer (8) Wärmeträger auf höherem Temperaturniveau oder auf niederem Temperaturniveau zugeführt wird.

16. Verfahren nach Anspruch 15, **dadurch gekennzeichnet, dass** der Wärmeträger mit dem höheren Temperaturniveau, der Wärmeträger mit dem mittleren Temperaturniveau und der Wärmeträger mit dem niederen Temperaturniveau über ein Wärmenetz bereitgestellt werden, wobei die jeweiligen Wärmeträgerzuleitungen (11, 12, 13) von entsprechenden Wärmenetzleitungen (1, 2, 3) gleichen Temperaturniveaus gespeist werden.

17. Verfahren nach Anspruch 16, **dadurch gekennzeichnet, dass** ein in dem Gebäudesystem genutzter Wärmeträger wieder an das angeschlossene Wärmenetz abgegeben wird.

18. Verfahren nach Anspruch 17, **dadurch gekennzeichnet, dass** ein zum Erwärmen genutzter Wärmeträger auf einem niedrigeren Temperaturniveau in das Wärmenetz rückgeleitet wird und in die Wärmenetzleitung entsprechend entweder dem mittleren Temperaturniveau oder dem niederen Temperaturniveau eingespeist wird.

19. Verfahren nach einem der Ansprüche 15 bis 18, **dadurch gekennzeichnet, dass** der Wärmeträger mit mittlerem Temperaturniveau dem Verdampfer (6) der Wärmepumpe (4) zuführbar ist, wobei Wärme aus dem Wärmeträger mit mittlerem Temperaturniveau in der Wärmepumpe (4) genutzt wird, um einen Wärmeträger in dem Wärmeträgerkreislauf (5) zu erwärmen, welcher genutzt wird um über den Wärmeträgerkreislauf (5) den Wärmeabnehmer (8) zu erwärmen.

20. Verfahren nach einem der Ansprüche 15 bis 19, **dadurch gekennzeichnet, dass** der Wärmeträger mit höherem Temperaturniveau dem Kondensator (7) der Wärmepumpe (4) zuführbar ist, und dass der Wärmeträger mit höherem Temperaturniveau in dem Kondensator (7) erhitzt wird, um den Wärmeabnehmer (8) oder einen Warmwasserspeicher (9) mit Wärme zu beaufschlagen.

21. Verfahren nach Anspruch 19, **dadurch gekennzeichnet, dass** ein Teilstrom des Wärmeträgers mit höherem Temperaturniveau abgezweigt wird und dem Verdampfer (6) zugeführt wird, um den dem Kondensator (7) zugeführten Teilstrom des Wärmeträgers mit höherem Temperaturniveau zu erhitzen.

22. Verfahren nach einem der Ansprüche 15 bis 18, **dadurch gekennzeichnet, dass** der Wärmeträger mit höherem Temperaturniveau unter Umgehung der Wärmepumpe (4) über eine Bypassleitung (16) des Gebäudesystems dem Wärmeabnehmer (8) zuführbar ist.

23. Verfahren nach einem der Ansprüche 15 bis 18, **dadurch gekennzeichnet, dass** der Wärmeträger mit niederem Temperaturniveau unter Umgehung der Wärmepumpe (4) über eine Bypassleitung (16) des Gebäudesystems dem Wärmeabnehmer (8) zuführbar ist.

24. Verfahren nach Anspruch 17 und 23, **dadurch gekennzeichnet, dass** ein zum Kühlen genutzter Wärmeträger auf einem höheren Temperaturniveau in das Wärmenetz rückgeleitet wird und in die Wärmenetzleitung (1, 2) entsprechend entweder dem mittleren Temperaturniveau oder dem höheren Temperaturniveau eingespeist wird.

25. Verfahren nach einem der Ansprüche 15 bis 21, **dadurch gekennzeichnet, dass** in dem Verdampfer (6) heruntergekühlter Wärmeträger verwendet wird, um Luft (35) zu kühlen.

## Claims

1. Building system for the air-conditioning and heat supply of at least one building or part of a building via at least one heating network with at least one heat pump (4) comprising an evaporator (6), a condenser (7) and a refrigerant circulation system (4') formed between the evaporator (6) and the condenser (7), with at least one heat consumer (8), which is connected in a heat-transferring manner to the condenser (7) of the heat pump (4) on the condenser side via a heat-transfer-medium circulation system (5) formed between the heat consumer (8) and the condenser (7) of the heat pump (4), and to heat-transfer-medium lines of the building system provided for connection to the heating network,
wherein the building system comprises at least three heat-transfer-medium supply lines (11, 12, 13) at different temperature levels on the inlet side, of which one heat-transfer-medium supply line (11) has a higher temperature level, one heat-transfer-medium supply line (12) has a medium temperature level, and one heat-transfer-medium supply line (13) has a low temperature level,
**characterized in that**
that the building system comprises controllable valves, via which the three heat-transfer-medium supply lines (11, 12, 13) can be controlled at the different temperature levels on the inlet side, wherein the respective heat-transfer-medium flow rate of the heat-transfer-medium supply lines (11, 12, 13) can be controlled via the controllable valves,
that the evaporator (6) is connected at least to the heat-transfer-medium supply line (11) at the higher temperature level and to the heat-transfer-medium supply line (12) at the medium temperature level on the inlet side,
that the heat-transfer-medium supply line (13) is connected to the heat consumer (8) at the low temperature level, and
that the building system has a valve branching the heat-transfer-medium supply line (11), via which the heat-transfer-medium supply line (11) is connected to the condenser (7) of the heat pump (4) on the inlet side at the higher temperature level.

2. Building system according to Claim 1, **characterized in that** the heat-transfer-medium supply lines (11, 12, 13) of the building system can each be connected to a heating network line (1, 2, 3) with the same temperature level.

3. Building system according to any one of the Claims 1 or 2, **characterized in that** the building system has a bypass line (16) and switchable valves, and that the heat-transfer-medium supply line (11) is connected to the higher temperature level bypassing the heat pump (4) via the bypass line (16) and the switchable valves are connected to the heat consumer (8).

4. Building system according to Claim 3, **characterized in that** the bypass line (16) flows into the heat-transfer-medium circulation system (5) in the flow direction of a heat-transfer medium conveyed in the heat-transfer-medium circulation system (5) in front of the heat consumer (8) and thus between the condenser (7) of the heat pump (4) and the heat consumer (8).

5. Building system according to one of the Claims 3 or 4, **characterized in that** the heat-transfer-medium supply line (13) flows into the bypass line (16) at the low temperature level and the bypass line (16) thereby serves as a common line for either the heat-transfer-medium supply line (11) at the higher temperature level or the heat-transfer-medium supply line (13) at the low temperature level.

6. Building system according to any one of the Claims 1 to 5, **characterized in that** the building system comprises a collective supply line (14) in which at least the heat-transfer-medium supply lines (11, 13) are brought together section by section at the low temperature level and at the higher temperature level, wherein the heat-transfer-medium supply lines (11, 13) comprise a common flow meter (32) and a common temperature measuring device (31).

7. Building system according to one of the Claims 1 to 6, **characterized in that** the building system has both at least one heat-transfer-medium return line (18) assigned to the heat consumer (8) as well as at least one heat-transfer-medium return line (19) assigned to the evaporator (6).

8. Building system according to Claim 7, **characterized in that** the building system has a collective return line (20) in which the heat-transfer-medium return line (18) of the heat consumer (8) and the heat-transfer-medium return line (19) of the evaporator (6) are brought together at least in sections, wherein the heat-transfer-medium return lines (18, 19) comprise a common flow meter (34) and a common temperature measuring device (33).

9. Building system according to any one of the Claims 7 or 8, **characterized in that** the heat-transfer-medium return lines (18, 19) or the collective return line (20) are provided for the medium temperature level or for the low temperature level of the heat-transfer-medium supply lines (12, 13) and can be connected to heating network lines (2, 3) of the heating network with a corresponding temperature level via at least one controllable valve.

10. Building system according to any one of the Claims 7 to 9, **characterized in that** the building system comprises an air cooler (10) assigned to the heat-transfer-medium return line (19) of the evaporator (6).

11. Building system according to any one of the Claims 1 to 10, **characterized in that** the heat-transfer-medium circulation system (5) comprises a auxiliary line (17) bypassing the heat consumer (8) and that the building system comprise a hot water tank (9), via which the auxiliary line (17) is routed.

12. Building system according to Claim 11, **characterized in that** the auxiliary line (17) branches off in the flow direction of a heat-transfer medium conveyed in the heat-transfer-medium circulation system (5) before the junction of the auxiliary line (17) and flows back into the heat-transfer-medium circulation system (5) before the heat-transfer-medium return line (18) branches off again.

13. Building system according to any one of the Claims 11 or 12, **characterized in that** the auxiliary line (17) with its part swerving away from the hot water tank (9) and the heat-transfer-medium circulation system (5) with its part supplying the heat consumer (8) are connected to each other in such a way that the two parts form a heat exchanger (37).

14. Heating network for the air-conditioning and heat supply of at least one building or part of a building, comprising at least three heating network lines (1, 2, 3) for different temperature levels, of which a heating network line (1) is provided for a higher temperature level, a heating network line (2) is provided for a medium temperature level, and a heating network line (3) is provided for a low temperature level, **characterized in that** at least one building system is connected to the three heating network lines (1, 2, 3) according to any one of the Claims 1 to 13.

15. Method for air-conditioning and heat supply of at least one building or part of a building via at least one heating network with the building system according to any one of the Claims 1 to 13, **characterized in that**,
depending on whether the building system is to be used for cooling or heating, heat-transfer medium is supplied to the heat pump (4) or the heat consumer (8) via a heat-transfer-medium supply line (11, 12, 13), valves in heat-transfer-medium lines of the building system are switched in such a way that heat-transfer medium is supplied to the heat pump (4) at a higher temperature level or at a medium temperature level, or that heat-transfer medium is supplied to the heat pump (4) at a higher temperature level and at a medium temperature level, or that heat-transfer medium is supplied to the heat consumer (8) at a higher temperature level or at a low temperature level.

16. Method according to Claim 15, **characterized in that** the heat-transfer medium at the higher temperature level, the heat-transfer medium at the medium temperature level, and the heat-transfer medium at the low temperature level are provided via a heating network, wherein the respective heat-transfer-medium supply lines (11, 12, 13) are supplied by corresponding heating network lines (1, 2, 3) of the same temperature level.

17. Method according to Claim 16, **characterized in that** a heat-transfer medium used in the building system is returned to the connected heating network.

18. Method according to Claim 17, **characterized in that** a heat-transfer medium used for heating is fed back into the heating network at a low temperature level and supplied into the heating network line corresponding to either the medium temperature level or the low temperature level.

19. Method according to any one of the Claims 15 to 18, **characterized in that** the heat-transfer medium at a medium temperature can be supplied to the evaporator (6) of the heat pump (4), wherein heat from the medium temperature heat carrier in the heat pump (4) is used to heat a heat-transfer medium in the heat-transfer-medium circulation system (5), which is used to heat the heat consumer (8) via the heat-transfer-medium circulation system (5).

20. Method according to any one of the Claims 15 to 19, **characterized in that** the heat-transfer medium at a higher temperature level can be supplied to the condenser (7) of the heat pump (4), and that the heat-transfer medium at a higher temperature level is heated in the condenser (7) in order to supply heat to the heat consumer (8) or a hot water tank (9).

21. Method according to Claim 19, **characterized in that** a partial flow of the heat-transfer medium at a higher temperature level is diverted and supplied to the evaporator (6) to heat the partial flow of the heat-transfer medium of a higher temperature level supplied to the condenser (7).

22. Method according to any one of the Claims 15 to 18, **characterized in that** the heat-transfer medium at a higher temperature level can be supplied to the heat consumer (8) by bypassing the heat pump (4) via a bypass conduction system (16) of the building system.

23. Method according to any one of the Claims 15 to 18, **characterized in that** the heat-transfer medium at a low temperature level can be supplied to the heat consumer (8) by bypassing the heat pump (4) via a bypass line (16) of the building system.

24. Method according to Claims 17 and 23, **characterized in that** a heat-transfer medium used for cooling is fed back into the heating network at a higher temperature level and is supplied into the heating network line (1, 2) according to either the middle temperature level or the higher temperature level.

25. Method according to any one of the Claims 15 to 21, **characterized in that** a cooled-down heat-transfer medium is used in the evaporator (6) to cool air (35).

## Revendications

1. Système pour bâtiment, destiné à climatiser et à alimenter en chaleur au moins un bâtiment ou une partie de bâtiment par l'intermédiaire d'au moins un réseau distributeur de chaleur,
pourvu d'au moins une pompe à chaleur (4), qui comporte un évaporateur (6), un condensateur (7) et un circuit d'agent réfrigérant (4') conçu entre l'évaporateur (6) et le condensateur (7),
pourvu d'au moins un consommateur de chaleur (8), qui du côté du condensateur est relié de manière à transmettre la chaleur avec le condensateur (7) de la pompe à chaleur (4), par l'intermédiaire d'un circuit d'agent caloporteur (5) conçu entre le consommateur de chaleur (8) et le condensateur (7) de la pompe à chaleur (4), et
pourvu de conduites d'agent caloporteur du système pour bâtiment, prévues pour être raccordées sur le réseau distributeur de chaleur,
le système pour bâtiment comportant du côté de l'arrivée au moins trois conduites d'alimentation d'agent caloporteur (11, 12, 13) à différents niveaux de température, dont une conduite d'alimentation d'agent caloporteur (11) présente un niveau de température supérieur, une conduite d'alimentation d'agent caloporteur (12) présente un niveau de température moyen et une conduite d'alimentation d'agent caloporteur (13) présente un bas niveau de température,
**caractérisé**
**en ce que** le système pour bâtiment comporte des vannes contrôlables, par l'intermédiaire desquelles les trois conduites d'alimentation d'agent caloporteur (11, 12, 13) sont susceptibles d'être actionnées chacune du côté arrivée avec les différents niveaux de température, par l'intermédiaire des soupapes contrôlables, le débit d'agent caloporteur respectif des conduites d'alimentation d'agent caloporteur (11, 12, 13) étant réglable,
**en ce que** l'évaporateur (6) est relié du côté arrivée avec au moins la conduite d'alimentation d'agent caloporteur (11) au niveau de température supérieur et avec la conduite d'alimentation d'agent caloporteur (12) au niveau de température moyen,
**en ce que** la conduite d'alimentation d'agent caloporteur (13) à bas niveau de température est reliée avec le consommateur de chaleur (8), et
**en ce que** le système pour bâtiment comporte une vanne ramifiant la conduite d'alimentation d'agent caloporteur (11), par l'intermédiaire de laquelle la conduite d'alimentation d'agent caloporteur (11) à haut niveau de température est reliée du côté arrivée avec le condensateur (7) de la pompe à chaleur (4).

2. Système pour bâtiment selon la revendication 1, **caractérisé en ce que** les conduites d'alimentation d'agent caloporteur (11, 12, 13) du système pour bâtiment sont susceptibles d'être raccordées chacune sur une conduite de réseau de distribution de chaleur (1, 2, 3) de niveau de température identique.

3. Système pour bâtiment selon l'une quelconque des revendications 1 ou 2, **caractérisé en ce que** le système pour bâtiment comporte une conduite de dérivation (16) et des vannes commutables et **en ce que** la conduite d'alimentation d'agent caloporteur (11) de niveau de température supérieur est reliée en contournant la pompe à chaleur (4) par l'intermédiaire de la conduite de dérivation (16) et des vannes commutables avec le consommateur de chaleur (8).

4. Système pour bâtiment selon la revendication 3, **caractérisé en ce que** dans la direction de circulation d'un agent caloporteur guidé dans le circuit d'agent caloporteur (5), la conduite de dérivation (16) débouche à l'avant du consommateur de chaleur (8) et ainsi entre le condensateur (7) de la pompe à chaleur (4) et le consommateur de chaleur (8) dans le circuit d'agent caloporteur (5).

5. Système pour bâtiment selon l'une quelconque des revendications 3 ou 4, **caractérisé en ce que** la conduite d'alimentation d'agent caloporteur (13) à bas niveau de température débouche dans la conduite de dérivation (16) et ainsi, la conduite de dérivation (16) sert de conduite commune pour soit la conduite d'alimentation d'agent caloporteur (11) à niveau de température supérieur ou la conduite d'alimentation d'agent caloporteur (13) à bas niveau de température.

6. Système pour bâtiment selon l'une quelconque des revendications 1 à 5, **caractérisé en ce que** le système pour bâtiment comporte une conduite d'alimentation collectrice (14), dans laquelle sont rassemblées par tronçons au moins les conduites d'alimentation d'agent caloporteur (11, 13) à bas niveau de température et à niveau de température supérieur, les conduites d'alimentation d'agent caloporteur (11, 13) comportant un compteur de débit (32) commun et un dispositif de mesure de la température (31) commun.

7. Système pour bâtiment selon l'une quelconque des revendications 1 à 6, **caractérisé en ce que** le système pour bâtiment comporte aussi bien au moins une conduite de retour d'agent caloporteur (18) associée au consommateur de chaleur (8) qu'également au moins une conduite de retour d'agent caloporteur (19) associée à l'évaporateur (6).

8. Système pour bâtiment selon la revendication 7, **caractérisé en ce que** le système pour bâtiment comporte une conduite collectrice de retour (20), dans laquelle sont rassemblées au moins par tronçons la conduite de retour d'agent caloporteur (18) du consommateur de chaleur (8) et la conduite de retour d'agent caloporteur (19) de l'évaporateur (6), les conduites collectrices de retour (18, 19) comportant un compteur de débit (34) commun et un dispositif de mesure de la température (33) commun.

9. Système pour bâtiment selon l'une quelconque des revendications 7 ou 8, **caractérisé en ce que** les conduites de retour d'agent caloporteur (18, 19) ou la conduite collectrice de retour (20) sont prévues pour le niveau de température moyen ou pour le bas niveau de température des conduites d'alimentation d'agent caloporteur (12, 13) et par l'intermédiaire d'au moins une vanne contrôlable, sont susceptibles d'être reliées avec des conduites de réseau de distribution de chaleur (2, 3) du réseau distributeur de chaleur à niveau de température correspondant.

10. Système pour bâtiment selon l'une quelconque des revendications 7 à 9, **caractérisé en ce que** le système pour bâtiment comporte un refroidisseur d'air (10) associé à la conduite de retour d'agent caloporteur (19) de l'évaporateur (6).

11. Système pour bâtiment selon l'une quelconque des revendications 1 à 10, **caractérisé en ce que** le circuit d'agent caloporteur (5) comporte en contournant le consommateur de chaleur (8) une conduite auxiliaire (17) et **en ce que** le système pour bâtiment comporte un accumulateur de chaleur (9), par l'intermédiaire duquel est guidée la conduite auxiliaire (17).

12. Système pour bâtiment selon la revendication 11, **caractérisé en ce que** dans la direction de circulation d'un agent caloporteur guidé dans le circuit d'agent caloporteur (5), la conduite auxiliaire (17) dérive avant l'embouchure dans la conduite auxiliaire (17) et avant la dérivation de la conduite de retour d'agent caloporteur (18), redébouche dans le circuit d'agent caloporteur (5).

13. Système pour bâtiment selon l'une quelconque des revendications 11 ou 12, **caractérisé en ce que**, par sa partie qui part de l'accumulateur de chaleur (9), la conduite auxiliaire (17) et par sa partie alimentant le consommateur de chaleur (8), le circuit d'agent caloporteur (5) sont en liaison mutuelle, de telle sorte que les deux parties constituent un échangeur thermique (37).

14. Réseau distributeur de chaleur, destiné à climatiser et à alimenter en chaleur au moins un bâtiment ou une partie de bâtiment, comportant au moins trois conduites de réseau de distribution de chaleur (1, 2, 3) pour différents niveaux de température, dont une conduite de réseau de distribution de chaleur (1) est prévue pour un niveau de température supérieur, une conduite de réseau de distribution de chaleur (2) est prévue pour un niveau de température moyen et une conduite de réseau de distribution de chaleur (3) est prévue pour un bas niveau de température,
**caractérisé**
**en ce que** sur les trois conduites de réseau de distribution de chaleur (1, 2, 3) est raccordé au moins un système pour bâtiment selon l'une quelconque des revendications 1 à 13.

15. Procédé, destiné à climatiser et à alimenter en chaleur au moins un bâtiment ou une partie de bâtiment par l'intermédiaire d'au moins un réseau distributeur de chaleur avec le système pour bâtiment selon l'une quelconque des revendications 1 à 13,
**caractérisé**
**en ce qu'**en fonction du fait s'il s'agit de refroidir ou de chauffer avec le système pour bâtiment, un agent caloporteur est alimenté par l'intermédiaire d'une conduite d'alimentation d'agent caloporteur (11, 12, 13) vers la pompe à chaleur (4) ou vers le consommateur de chaleur (8), **en ce que** des vannes sont commutées dans des conduites d'agent caloporteur du système pour bâtiment, de telle sorte que vers la pompe à chaleur (4) soit alimenté un agent caloporteur à niveau de température supérieur ou à niveau de température moyen, ou que vers la pompe à chaleur (4), soit alimenté un agent caloporteur à niveau de température supérieur et à niveau de température moyen, ou que vers le consommateur de chaleur (8) soit alimenté un agent caloporteur à niveau de température supérieur ou à bas niveau de température.

16. Procédé selon la revendication 15, **caractérisé en ce que** l'agent caloporteur à niveau de température supérieur, l'agent caloporteur à niveau de température moyen et l'agent caloporteur à bas niveau de température sont mis à disposition par l'intermédiaire d'un réseau distributeur de chaleur, les conduites d'alimentation d'agent caloporteur (11, 12, 13) respectives étant approvisionnées par des conduites de réseau de distribution de chaleur (1, 2, 3) correspondantes, de niveaux de température identiques.

17. Procédé selon la revendication 16, **caractérisé en ce qu'**un agent caloporteur utilisé dans le système pour bâtiment est restitué en retour au réseau distributeur de chaleur raccordé.

18. Procédé selon la revendication 17, **caractérisé en ce qu'**un agent caloporteur utilisé pour chauffer est renvoyé à un bas niveau de température dans le réseau distributeur de chaleur et est injecté en conséquence dans la conduite de réseau de distribution de chaleur, soit au niveau de température moyen ou au bas niveau de température.

19. Procédé selon l'une quelconque des revendications 15 à 18, **caractérisé en ce que** l'agent caloporteur à niveau de température moyen est susceptible d'être alimenté vers l'évaporateur (6) de la pompe à chaleur (4), de la chaleur provenant de l'agent caloporteur à niveau de température moyen étant utilisée dans la pompe à chaleur (4) pour chauffer un agent caloporteur dans le circuit d'agent caloporteur (5), lequel est utilisé pour chauffer le consommateur de chaleur (8) par l'intermédiaire du circuit d'agent caloporteur (5).

20. Procédé selon l'une quelconque des revendications 15 à 19, **caractérisé en ce que** l'agent caloporteur à niveau de température supérieur est susceptible d'être alimenté vers le condensateur (7) de la pompe à chaleur (4), et **en ce que** l'agent caloporteur à niveau de température supérieur est chauffé dans le condensateur (7) pour soumettre à de la chaleur le consommateur de chaleur (8) ou un accumulateur de chaleur (9).

21. Procédé selon la revendication 19, **caractérisé en ce qu'**un flux partiel de l'agent caloporteur à niveau de température supérieur est dérivé et alimenté vers l'évaporateur (6) pour chauffer le flux partiel d'agent caloporteur de niveau de température supérieur alimenté vers le condensateur (7).

22. Procédé selon l'une quelconque des revendications 15 à 18, **caractérisé en ce que** l'agent caloporteur à niveau de température supérieur est susceptible d'être alimenté vers le consommateur de chaleur (8) en contournant la pompe à chaleur (4), par l'intermédiaire d'une conduite de dérivation (16) du système pour bâtiment.

23. Procédé selon l'une quelconque des revendications 15 à 18, **caractérisé en ce que** l'agent caloporteur à bas niveau de température est susceptible d'être alimenté vers le consommateur de chaleur (8), en contournant la pompe à chaleur (4) par l'intermédiaire d'une conduite de dérivation (16) du système pour bâtiment.

24. Procédé selon la revendication 17 et 23, **caractérisé en ce qu'**un agent caloporteur, utilisé pour refroidir est renvoyé à un niveau de température supérieur dans le réseau distributeur de chaleur et est injecté en conséquence dans la conduite de réseau de distribution de chaleur (1, 2), soit au niveau de température moyen ou au niveau de température supérieur.

25. Procédé selon l'une quelconque des revendications 15 à 21, **caractérisé en ce qu'**un agent caloporteur refroidi à la baisse dans l'évaporateur (6) est utilisé pour refroidir de l'air (35).
